# EUROPÄISCHE PATENTSCHRIFT

(11) **EP 1 696 713 B1**
(45) Veröffentlichungstag und Bekanntmachung des Hinweises auf die Patenterteilung: **31.10.2012**
(21) Anmeldenummer: 06002364.5
(22) Anmeldetag: 06.02.2006
(51) Int. Cl.: H05B 41/282, H05B 41/288

(54) **EVG für Hochdruckentladungslampe mit Strommesseinrichtung**
Electronic ballast with current measuring means for high-pressure discharge lamps
Ballast électronique avec dispositif de mesure de courant pour lampe à décharge haute-pression

(30) Priorität: 24.02.2005 DE 102005008483
(43) Veröffentlichungstag der Anmeldung: 30.08.2006
(73) Patentinhaber: OSRAM AG, 81543 München (DE)
(72) Erfinder: Braun, Alois, 86633 Neuburg (DE); Limmer, Walter, 81825 München (DE); Mühlschlegel, Joachim, 82194 Gröbenzell (DE); Ziegler, Markus, Schaumburg, IL 60173 (US)

(56) Entgegenhaltungen:
- WO-A-96/38024
- US-A1- 2004 051 481
- US-B1- 6 437 515

## Beschreibung

### Technisches Gebiet

Die Erfindung bezieht sich auf elektronische Vorschaltgeräte für Hochdruckentladungslampen und entsprechende Betriebsverfahren.

### Stand der Technik

Der Betrieb von Hochdruckentladungslampen mit elektronischen Vorschaltgeräten ist an sich gängig. Solche Vorschaltgeräte beinhalten Wandler, häufig Halbbrückenwandler mit zwei Schalttransistoren und Vollbrückenwandler mit vier Schalttransistoren. Während des Dauerbetriebs der Lampe erzeugen diese Wandler vereinfacht ausgedrückt in ihrer Polarität niederfrequent alternierende Gleichspannungs-Versorgungsleistungen für die Lampe. Dabei werden bei einem wirklichen Gleichstrombetrieb in Folge der Asymmetrie auftretende störende Phänomene in der Lampe vermieden, andererseits aber gleichzeitig ebenfalls störende höhere Frequenzen von der Lampe weitgehend ferngehalten.

Es ist ferner bekannt, bei solchen Vorschaltgeräten den Lampenstrom zu messen, etwa um eine Sicherheitsabschaltung bei Überschreiten oder Unterschreiten bestimmter Schwellenwerte oder eine Regelschaltung zum Regeln des Lampenstroms oder der Lampenleistung mit einem entsprechenden Signal zu versorgen. Im Betrieb des Wandlers ergeben sich Schaltphasen alternierender Polarität der Ströme durch die Schalttransistoren, so dass im Stand der Technik verschiedene Lösungen dokumentiert sind, mit dem daraus folgenden Polaritätswechsel des Strommesssignals umzugehen.

Aus der US 6 437 515 B1 ist ein elektronisches Betriebsgerät mit einem symmetrischen Halbbrückenwandler bekannt, welches zur Messung des Lampenstromes im Mittelzweig des Halbbrückenwandlers seriell zur Hochdruckentladungslampe einen Strommeßshunt aufweist.

Aus der US 2004/51481 A1 ist eine Schaltungsanordnung zum Betreiben einer Niederdruck-Entladungslampe bekannt, die eine Strommessschaltung mit einem Messwiderstand und einem nachgeschalteten kapazitiven Tiefpassfilter offenbart.

Aus der WO 96/38024A1 ist ein elektronisches Betriebsgerät bekannt, welches zur Strommessung einen Transformator aufweist.

### Darstellung der Erfindung

Der Erfindung liegt das technische Problem zugrunde, ein elektronisches Vorschaltgerät zum Betreiben einer Hochdruckentladungslampe und ein entsprechendes Betriebsverfahren anzugeben, bei denen in einer günstigen Weise Strommessungen durchgeführt werden können.

Die Erfindung bezieht sich zum einen auf ein elektronisches Vorschaltgerät zum Betreiben einer Hochdruckentladungslampe mit einem Wandler mit zumindest zwei Schalttransistoren zum Erzeugen einer Versorgungsleistung für die Lampe durch einen Schaltbetrieb der Schalttransistoren mit Schaltphasen alternierender Polarität der Ströme durch die Lampe, gekennzeichnet durch eine Strommesseinrichtung mit einem Messwiderstand, der seriell zu zumindest einem der Schalttransistoren geschaltet ist, und die dazu ausgelegt ist, nur während Schaltphasen des Wandlers mit genau einer der Polaritäten Strommessungen durchzuführen, sowie auf ein entsprechendes Beleuchtungsgerät mit einem solchen Vorschaltgerät und einer passenden Hochdruckentladungslampe und schließlich auf ein entsprechendes Betriebsverfahren zum Betreiben der Hochdruckentladungslampe.

Bevorzugte Ausgestaltungen sind in den abhängigen Ansprüchen angegeben und werden im Folgenden erläutert. Dabei beziehen sich die einzelnen Merkmale implizit sowohl auf die Vorrichtungskategorie als auch auf die Verfahrenskategorie der Erfindung, ohne dass hierzwischen im Einzelnen explizit unterschieden wird.

Die Grundidee der Erfindung besteht darin, den im Stand der Technik bekannten technischen Aufwand für Strommessungen mit alternierender Strompolarität zu vermeiden, indem nur in Schaltphasen einer bestimmten Polarität gemessen wird. Dann kann eine einfache Strommessung über einen Messwiderstand mit auch im Übrigen geringem Aufwand hinsichtlich der Auswertung erfolgen.

Es hat sich nämlich herausgestellt, dass für viele Anwendungen eine mehr oder weniger kontinuierliche Strommessung nicht wirklich notwendig ist und der hinsichtlich des Polaritätswechsels dafür erforderliche technische Aufwand zu unnötig komplexen und teuren Lösungen führt. Die hier in Betracht kommenden Wandlerschaltungen zeigen eine bei den typischen Kommutierfrequenzen von Hochdruckentladungslampen bzw. den sich daraus ergebenden Schaltphasenlängen ausreichende Stabilität, so dass ein intermittierender Strommessbetrieb praktikabel ist.

Besonders bewährt hat sich die Erfindung für einen Halbbrückenwandler mit zwei Schalttransistoren. Die Hochdruckentladungslampe ist dabei am Mittenabgriff zwischen den beiden Schalttransistoren angeschlossen und mit ihrem anderen Anschluss vorzugsweise kapazitiv an zumindest eines der Versorgungspotentiale des Halbbrückenwandlers angeschlossen. Die kapazitive Ankopplung führt dazu, dass sich an diesem Lampenanschluss im Wesentlichen ein Potential mittig zwischen den beiden Versorgungspotentialen des Halbbrückenwandlers einstellt. Die kapazitive Ankopplung hat dabei den Vorteil, im Fall von Asymmetrien durch ein Abweichen dieses Zwischenpotentials von der Mitte zwischen den Versorgungspotentialen "selbstrückführend" zu wirken, also gewissermaßen eine Symmetrisierwirkung hinsichtlich des Lampenbetriebs zu bieten. In Verbindung mit der in bestimmten Schaltphasen erfolgenden, also hinsichtlich der Polarität asymmetrischen, Lampenstrommessung, ist dies von Vorteil.

Vorzugsweise wird der Wandler digital gesteuert, werden also die Signale zum Einschalten und Ausschalten der Schalttransistoren durch eine Digitalschaltung hervorgerufen. Vorzugsweise findet hierfür ein programmierbarer Mikrocontroller Verwendung.

Ferner richtet sich die Erfindung, insbesondere im Fall der digitalen Steuerung, auf Anwendungen mit einer Strom- oder Leistungsregelung. Die Regelschaltung ist dabei im Fall der Digitalsteuerung Bestandteil derselben. Die digitale Wandlersteuerung kann dabei insbesondere über das Tastverhältnis, also die relative Dauer der Schaltphasen, steuern.

Innerhalb der bisher erwähnten Schaltphasen des Wandlers zur Polaritätskommutierung in der Lampe ist der Wandler ferner dazu ausgelegt, die Ausgangsspannung zur Versorgung der Lampe an die Lampe anzupassen, d. h. konkret abzusenken. Die Erfindung wird daher zusätzlich zu der für die Polaritätskommutierung zuständigen Halbbrückenfunktion (z. B. 60 Hz - 400 Hz) jeweils innerhalb einer Einschaltphase eines der beiden Schalttransistoren durch einen intermittierenden Schaltbetrieb dieses Schalttransistors als Tiefsetzer betrieben. Die ohnehin notwenige Lampendrossel kann dabei als Induktivität des Tiefsetzer dienen.

Dies kann insbesondere in Kombination mit einem dem Halbbrückenwandler vorgeschalteten Hochsetzer als Leistungsfaktorkorrekturschaltung erfolgen. Der Hochsetzer ist eine besonders einfache und effiziente Möglichkeit für eine Leistungsfaktorkorrekturschaltung, hat aber gegenüber anderen aufwändigeren Leistungsfaktorkorrekturschaltungen den Nachteil, dass er nur Spannungen oberhalb des Scheitelpunkts der Versorgungsnetzspannung erzeugen kann. Daraus ergibt sich, dass der Mittenabgriff des Halbbrückenwandlers mit diesem Spannungshub oszilliert, also die Lampe als Versorgungsspannungsamplitude die Hälfte dieses Spannungshubes sieht. Für den Dauerbetrieb einer Hochdruckentladungslampe kann dieser Wert zu groß sein, weswegen die erwähnte Tiefsetzerfunktion verwendet wird.

Innerhalb der für die Strommessung verwendeten Schaltphasen erfolgt diese dann übrigens innerhalb der (bezogen auf den Tiefsetzerbetrieb) Einschaltphasen des betreffenden Schalttransistors. Die gemessenen Stromwerte können dann wegen der bekannten zeitlichen Parameter des Tiefsetzerbe triebs auf den tatsächlichen Lampenstrom umgerechnet werden (d. h. unter Berücksichtigung der sägezahnförmigen Strom-/Zeitflächen).

In Zusammenhang mit der bereits erwähnten Strom- oder Leistungsregelschaltung oder bei anderen Verwendungen des gemessenen Stromwertes wird vorzugsweise während derjenigen Schaltphasen, in denen keine Strommessung erfolgt, auf Speicherwerte aus der unmittelbar vorhergehenden Schaltphase zurückgegriffen. Dabei kann es sich um abgespeicherte Strommesswerte oder auch daraus ermittelte andere Speicherwerte handeln. Jedenfalls wird ein Wert verwendet, der auf eine Strommessung in der vorhergehenden Schaltphase zurückgeht. Bei der Strommessung innerhalb dieser Schaltphase kann es sich im Übrigen um eine Spitzenwertermittlung oder eine Strommittelung oder auch um eine (evtl. über einen kürzeren Bereich gemittelte) Strommessung zu einem bestimmten Zeitpunkt innerhalb der Schaltphase, etwa innerhalb deren Mitte, handeln. In diesem Fall finden die Strommessungen also in einem im Verhältnis zu der Ausdehnung der Schaltphase relativ kleinen zeitlichen Anteil statt.

In diesem Zusammenhang ist klarzustellen, dass sich der Begriff der Schaltphasen alternierender Polarität der Ströme auf die Lampenströme bezieht und damit also auf die (Halbbrücken-) Wandler-Schaltphasen und nicht die Tiefsetzer-Schaltphasen (mit viel höherer Frequenz). Die Ströme durch die Schalttransistoren selbst alternieren allerdings auch in Folge des Tiefsetzerbetriebes. In Bezug auf die Strompolaritätswechsel in Folge des Tiefsetzerbetriebes kann zu solchen Zeitpunkten innerhalb der (Halbbrücken-) Wandlerschaltphasen gemessen werden, in denen die richtige (immer gleiche) Polarität vorliegt und/oder die Spannung an dem Messwiderstand vorteilhafterweise über einen kapazitiven Tiefpass (RC-Tiefpass) abgegriffen werden. Mit dem Tiefpass wird eine gewisse zeitliche Mittelung oder Glättung erzeugt, so dass höherfrequente Anteile nicht die Auswertung stören. Andererseits muss der Tiefpass nicht so ausgelegt sein, dass ein Mittelwert über die gesamte Schaltphase (im Sinn der Polaritätskommutierung in der Lampe) mittelt.

### Kurze Beschreibung der Zeichnungen

Im Folgenden wird die Erfindung anhand eines Ausführungsbeispiels näher erläutert. Die dabei dargestellten einzelnen Merkmale können auch in anderen Kombinationen erfindungswesentlich sein. Insbesondere bezieht sich die vorstehende wie die nachfolgende Beschreibung immer sowohl auf die Vorrichtungs- als auch auf die Verfahrenskategorie der Erfindung.
- Figur 1: zeigt ein schematisches Schaltdiagramm eines erfindungsgemäßen Vorschaltgeräts.
- Figur 2: zeigt schematisierte Zeitverlaufsdiagramme zur Illustration der Taktung von Schalttransistoren des Vorschaltgeräts aus Figur 1.
- Figur 3: zeigt Messdiagramme zum Betrieb des Vorschaltgeräts aus Figur 1 bei einer Taktung gemäß Figur 2.

### Bevorzugte Ausführung der Erfindung

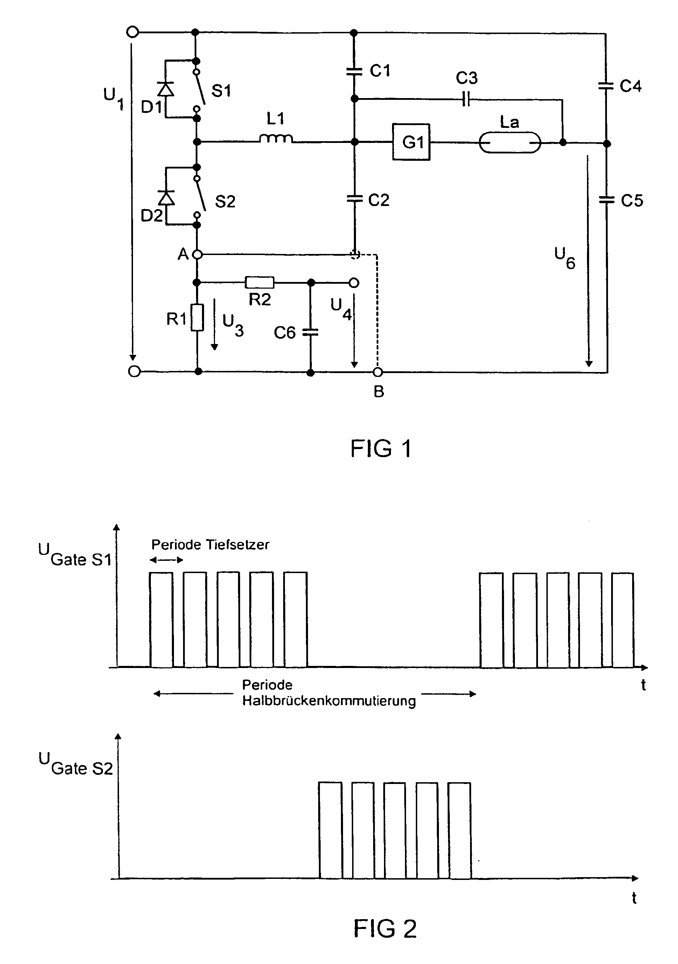

Figur 1 zeigt eine an sich bekannte Halbbrückentopologie mit zwei Schalttransistoren S₁ und S₂. Diese liegen seriell zwischen zwei Versorgungsästen, zwischen denen eine Zwischenkreisspannung U₁ anliegt. Die Zwischenkreisspannung U₁ wird durch Gleichrichtung einer Netzspannung mit entsprechender Filterung und durch eine Leistungsfaktorkorrektur mit Hilfe eines Hochsetzers erzeugt.

Durch einen alternierenden Schaltbetrieb der Halbbrückentransistoren S₁ und S₂ wird ein Mittenabgriff dazwischen hin und her geschaltet zwischen den Potentialen der Versorgungsäste. Dementsprechend liegt an dem linken Anschluss einer in Figur 1 eingezeichneten Drossel L₁ ein diesem Schaltbetrieb entsprechendes hochfrequentes Wechselpotential an. Die Drossel L₁ liegt seriell zu einer Hochdruckentladungslampe, wobei ein dazwischen geschalteter Block G₁ für eine an sich bekannte Zündschaltung steht. Diese erzeugt in einer für die Erfindung nicht näher interessierenden Weise durch eine Kondensatorentladung und Hochtransformation einen Zündpuls zum Zünden der Lampe. Der rechte Anschluss der Lampe ist über zwei Koppelkondensatoren C₄ und C₅ mit den beiden Versorgungsästen verbunden. Die Koppelkondensatoren C₄ und C₅ stellen sicher, dass der rechte Anschluss der Lampe ein Potential in der Mitte zwischen den Potentialen der Versorgungsäste hat. Die Schaltung ist somit also in der Lage, über der Lampe die halbe Zwischenkreisspannung zu erzeugen. Parallel zu der Lampe liegt ein Filterkondensator C₃. Ein Abgriff zwischen der Lampendrossel L₁ und der Zündschaltung G₁ ist über zwei Filterkondensatoren C₁ und C₂ jeweils mit den Versorgungsästen verbunden. Die Positionen der Filterkondensatoren C₁, C₂ und C₃ müssen nicht notwendigerweise gleichzeitig vorliegen. Es können auch nur eine oder zwei der Filterkondensatorpositionen besetzt sein. Der Filterkondensator C₂ kann im Übrigen auch statt mit dem Punkt A mit dem Punkt B verbunden sein.

Im tatsächlichen Betrieb einer Hochdruckentladungslampe ist eine Brennspannung von größenordnungsmäßig 80 V - 150 V notwendig, die tatsächlich kleiner ist als die üblicherweise zur Verfügung stehenden halbierten Zwischenkreisspannungen. Daher wird hier während einer Schaltphase, in der beispielsweise der Halbbrückentransistor S₁ leitend ist, dieser getaktet unterbrochen, um gemeinsam mit der Drossel L₁ während dieser Schaltphase einen Tiefsetzerbetrieb zu erzeugen. Dadurch kann durch den Tiefsetzerbetrieb eine gewünschte Lampenbrennspannung eingestellt werden.

Die Dioden D₁ und D₂ sind Freilaufdioden, die auch durch die Bodydioden von Feldeffekttransistoren S₁ und S₂ verkörpert sein können.

Figur 1 zeigt ferner einen Strommesswiderstand R₁ zwischen dem in der Figur bezugspotentialnäheren (unteren) Anschluss des unteren Schalttransistors S₂ und dem Bezugspotential auf dem unteren Versorgungsast selbst. Über diesen Messwiderstand R₁ fällt die Messspannung U₃ ab, die über einen kapazitiven Tiefpass aus dem Widerstand R₂ und dem Kondensator C₆ gemittelt wird. Die gemittelte Spannung U₄ wird der Auswertung durch eine hier nicht dargestellte digitale Mikrocontroller-Steuereinrichtung zugeführt.

Die Schaltposition des Messwiderstands R₁ liegt einerseits seriell zu den beiden Schalttransistoren S₁ und S₂ und andererseits direkt am Bezugspotential (interne Masse). Damit ist die Auswertung der auf das Bezugspotential bezogenen Spannung U₄ besonders einfach.

Natürlich sind auch Varianten der Schaltung in Figur 1 denkbar. Beispielsweise könnten statt einer Lampendrossel zwei Lampendrosseln vorliegen, die an der Startschaltung G₁ zusammengeführt sind, jedoch getrennt mit den Schalttransistoren verbunden sind, d. h. eine mit dem unteren Anschluss des oberen Schalttransistors S₁ und eine weitere mit dem oberen Anschluss des unteren Schalttransistors S₂. Dabei könnten die Freilaufdioden D₁ und D₂ auch verkreuzt angeschlossen sein, d. h. die Freilaufdiode für den unteren Schalttransistor S₂ an dem oberen Anschluss des unteren Schalttransistors S₂ und von dort zu dem oberen Versorgungspotentialast und umgekehrt die Freilaufdiode für den oberen Schalttransistor S₁ vom unteren Anschluss des oberen Schalttransistors S₁ bis zum unteren Anschluss des unteren Schalttransistors S₂.

Figur 2 zeigt schematisch die Taktung des Schaltbetriebs der beiden Transistoren S₁ und S₂ aus Figur 1. Der obere Teil steht für den oberen Transistor S₁, der untere für den unteren Transistor S₂. Man erkennt, dass hier zwei Perioden auftreten, und zwar zum einen eine längere Periode zwischen den Pulspaketen und zum anderen eine kürzere Periode innerhalb der Pulspakete. Qualitativ entspricht dies der bereits geschilderten Kombination aus Tiefsetzerbetrieb und Halbbrückenfunktion, wobei die kurze Periode für den Tiefsetzerbetrieb und die längere für die Halbbrückenfunktion steht.

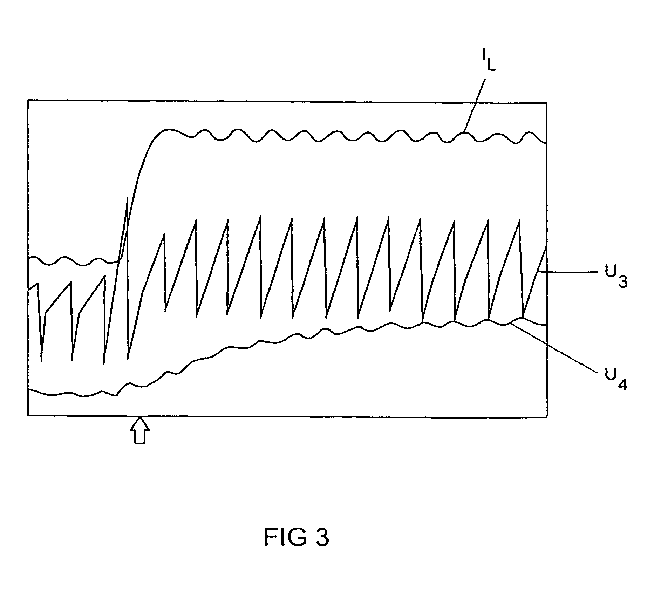

Figur 3 zeigt real gemessene Signale an einem Vorschaltgerät gemäß Figur 1. Dabei bezeichnet I_{L} den Lampenstrom im oberen Bereich des Diagramms, während die Spannungen U₃ und U₄ gemäß Figur 1 in der Mitte bzw. im unteren Bereich des Diagramms dargestellt sind. Im Bereich des unter dem Diagramm eingezeichneten Pfeils findet ein Halbbrücken-Kommutiervorgang statt. Vor dem Pfeil besteht eine Schaltphase mit offenem Schalttransistor S₂, während in der Schaltphase nach dem Pfeil der obere Schalttransistor S₁ offen ist. Der jeweils andere Schalttransistor arbeitet dann in der Tiefsetzerfunktion.

Vor dem Pfeil hat U₃ einen kleinen negativen zeitlichen Mittelwert und für die Messung keine sinnvolle Bedeutung. Nach dem Pfeil liegt der Mittelwert erkennbar höher im positiven Bereich. Insbesondere erkennt man, dass der durch R₂ und C₆ tiefpassgefilterte Wert von U₄ nach dem Pfeil und in der neuen Schaltphase ansteigt und bei einem bestimmten Wert stehen bleibt. Die sägezahnartige Struktur der Spannung U₃, die in der geglätteten Spannung U₄ nur noch als Restunruhe zu erkennen ist, entspricht der Tiefsetzfunktion, also Ladevorgängen der Lampendrossel L₁ und entsprechenden Ladeströmen mit linearem Anstieg. Die Tiefsetzerfunktion erzeugt über der Lampe in Folge der Glättung durch die Lampendrossel L₁ und durch die Filterkondensatoren C₁ - C₃ im Wesentlichen eine Gleichspannung, aus der sich wiederum näherungsweise ein Gleichlampenstrom I_{L} ergibt, was im oberen Bereich des Diagramms gut zu erkennen ist. Der im Vergleich dazu etwas langsamere Anstieg der Spannung U₄ erklärt sich durch die Verzögerungswirkung des Tiefpassfilters aus R₂ und C₆.

Tatsächlich wird die Spannung U₄ etwa in der Mitte der betreffenden Schaltphase erfasst und zur Auswertung herangezogen. Dazu wird aus U₄ in Kenntnis der Zeitparameter des Tiefsetzerbetriebs in dem Mikrocontroller das notwendige Tastverhältnis für die Halbbrückenwandlerfunktion (d. h. Halbbrücken-Kommutiervorgänge) der Schalttransistoren S₁ und S₂ errechnet. Hierbei handelt es sich um eine Regelung auf einen vorgegebenen Lampenstromsollwert. Wenn die entsprechenden Einschalt- und/oder Ausschaltzeiten und/oder das Tastverhältnis bekannt sind, werden diese abgespeichert und bis zur nächsten Messung in der übernächsten Schaltphase bzw. der nächsten Schaltphase gleicher Polarität dem Betrieb zugrunde gelegt. Es handelt sich also gewissermaßen um einen intermittierenden Regelvorgang.

Insgesamt ermöglicht die Erfindung damit eine kostengünstige und hinsichtlich Steuerung und Bauteileaufwand einfache Erfassung oder Regelung bzw. Einstellung des Lampenstroms.

## Patentansprüche

1. Elektronisches Vorschaltgerät zum Betreiben einer Hochdruckentladungslampe (L) mit einem Wandler mit zumindest zwei Schalttransistoren (S₁, S₂) zum Erzeugen einer Versorgungsleistung für die Lampe (L) durch einen Schaltbetrieb der Schalttransistoren (S₁, S₂) mit Schaltphasen alternierender Polarität der Ströme durch die Lampe (L), wobei der Wandler innerhalb der Schaltphasen als Tiefsetzer betrieben wird, einer Strommesseinrichtung (R₁, R₂, C₆) mit einem Messwiderstand (R₁), der seriell zu zumindest einem der Schalttransistoren (S₁, S₂) geschaltet ist, **dadurch gekennzeichnet, dass** die Spannung an dem Messwiderstand (R₁) über ein kapazitives Tiefpassfilter (R₂, C₆) abgegriffen wird, die Strommesseinrichtung (R₁, R₂, C₆) dazu ausgelegt ist, nur innerhalb jeweils einer Schaltphase des Wandlers mit genau einer der Polaritäten Strommessungen durchzuführen, wobei die Strommessungen jeweils in einem kleinen Anteil der Schaltphase des Wandlers mit der genau einen Polarität durchgeführt werden.

2. Vorschaltgerät nach Anspruch 1, bei dem der Wandler ein Halbbrückenwandler mit genau zwei Schalttransistoren (S₁, S₂) ist.

3. Vorschaltgerät nach Anspruch 2, bei dem die Lampe (L) einerseits an einem Mittenabgriff zwischen den beiden Schalttransistoren (S₁, S₂) des Halbbrückenwandlers und andererseits über eine kapazitive Ankopplung (C₄, C₅) an zumindest eines der Versorgungspotentiale des Halbbrückenwandlers angeschlossen ist.

4. Vorschaltgerät nach einem der vorstehenden Ansprüche mit einer digitalen Steuereinrichtung zur Steuerung des Betriebs des Wandlers.

5. Vorschaltgerät nach Anspruch 4, bei dem die digitale Steuereinrichtung ein Mikrocontroller ist.

6. Vorschaltgerät nach einem der vorstehenden Ansprüche mit einer Strom- oder Leistungsregelschaltung zum Regeln des Lampenstroms oder der Lampenleistung.

7. Vorschaltgerät nach einem der vorstehenden Ansprüche, bei dem dem Wandler ein Hochsetzer als Leistungsfaktorkorrekturschaltung und zur Erzeugung der Versorgungspotentiale für den Wandler vorgeschaltet ist.

8. Vorschaltgerät nach einem der vorstehenden Ansprüche, das dazu ausgelegt ist, dass während den Schaltphasen ohne Strommessungen auf aus Strommessungen der davor liegenden Schaltphase ermittelte Speicherwerte zurückgegriffen wird.

9. Beleuchtungsgerät mit einem Vorschaltgerät nach einem der vorstehenden Ansprüche und einer dazu passenden Hochdruckentladungslampe (L).

10. Verfahren zum Betreiben einer Hochdruckentladungslampe (L) mit einem elektronischen Vorschaltgerät zum Betreiben einer Hochdruckentladungslampe (L) mit einem Wandler mit zumindest zwei Schalttransistoren (S₁, S₂) zum Erzeugen einer Versorgungsleistung für die Lampe (L) durch einen Schaltbetrieb der Schalttransistoren (S₁, S₂) mit Schaltphasen alternierender Polarität der Ströme durch die Lampe (L), wobei der Wandler innerhalb der Schaltphasen als Tiefsetzer betrieben wird, einer Strommesseinrichtung (R₁, R₂, C₆) mit einem Messwiderstand (R₁), der seriell zu zumindest einem der Schalttransistoren (S₁, S₂) geschaltet ist, und die dazu ausgelegt ist, nur während Schaltphasen des Wandlers mit genau einer der Polaritäten Strommessungen durchzuführen, wobei die Spannung an dem Messwiderstand (R₁) über ein kapazitives Tiefpassfilter (R₂, C₆) abgegriffen wird, **gekennzeichnet durch** folgende Schritte:
- Kommutieren des Lampenstromes
- Warten für eine bestimmte Zeit
- messen des Lampenstromes nur bei einer vorbestimmten Polarität des Lampenstromes
- Kommutieren des Lampenstromes

11. Verfahren zum Betreiben einer Lampe (L) nach Anspruch 10 mit einem Vorschaltgerät nach einem der Ansprüche 2 - 8.

## Claims

1. Electronic ballast for operating a high-pressure discharge lamp (L) having a converter having at least two switching transistors (S₁, S₂) for the purpose of producing a supply power for the lamp (L) using a switching operation for the switching transistors (S₁, S₂) having switching phases of alternating polarity of the currents through the lamp (L), the converter being operated as a step-down converter within the switching phases, and having a current-measuring device (R₁, R₂, C₆) having a measuring resistor (R₁), which is connected in series with at least one of the switching transistors (S₁, S₂) **characterized in that** the voltage across the measuring resistor (R₁) is tapped off via a capacitive low-pass filter (R₂, C₆), the current measuring device (R₁, R₂, C₆) is designed to carry out current measurements only within in each case one switching phase of the converter with precisely one of the polarities, the current measurements being carried out in each case in a small portion of the switching phases of the converter with precisely one polarity.

2. Ballast according to Claim 1, in which the converter is a half-bridge converter having precisely two switching transistors (S₁, S₂).

3. Ballast according to Claim 2, in which the lamp (L) is connected on the one hand to a center tap between the two switching transistors (S₁, S₂) of the half-bridge converter and, on the other hand, via a capacitive coupling (C₄, C₅), to at least one of the supply potentials of the half-bridge converter.

4. Ballast according to one of the preceding claims having a digital control device for controlling the operation of the converter.

5. Ballast according to Claim 4, in which the digital control device is a microcontroller.

6. Ballast according to one of the preceding claims having a current-regulating circuit or power-regulating circuit for the purpose of regulating the lamp current or the lamp power.

7. Ballast according to one of the preceding claims, in which a step-up converter is connected upstream of the converter as a power factor correction circuit and for the purpose of producing the supply potentials for the converter.

8. Ballast according to one of the preceding claims, which is designed such that reference is made to stored values determined from current measurements of the preceding switching phase during the switching phases with no current measurements.

9. Illumination device having a ballast according to one of the preceding claims and a high-pressure discharge lamp (L) suitable therefor.

10. Method for operating a high-pressure discharge lamp (L) having an electronic ballast for operating a high-pressure discharge lamp (L) having a converter having at least two switching transistors (S₁, S₂) for the purpose of producing a supply power for the lamp (L) using a switching operation for the switching transistors (S₁, S₂) having switching phases of alternating polarity of the currents through the lamp (L), the converter being operated as a step-down converter within the switching phases, and having a current-measuring device (R₁, R₂, C₆) having a measuring resistor (R₁), which is connected in series with at least one of the switching transistors (S₁, S₂), which current-measuring device is designed to carry out current measurements only during switching phases of the converter with precisely one of the polarities, the voltage across the measuring resistor (R₁) being tapped off via a capacitive low-pass filter (R₂, C₆), **characterized by** the following steps:
- commutating the lamp current
- waiting for a specific time
- measuring the lamp current only given a predetermined polarity of the lamp current
- commutating the lamp current.

11. Method for operating a lamp (L) according to Claim 10 having a ballast according to one of Claims 2-8.

## Revendications

1. Ballast électronique pour faire fonctionner une lampe à décharge haute pression (L), comprenant un transformateur avec au moins deux transistors de commutation (S₁, S₂) pour produire une puissance d'alimentation pour la lampe (L) grâce à un fonctionnement de commutation des transistors de commutation (S₁, S₂) présentant des phases de commutation de polarité alternative des courants circulant à travers la lampe (L), le transformateur fonctionnant en tant que convertisseur abaisseur à l'intérieur des phases de commutation ; un dispositif de mesure de courant (R₁, R₂, C₆) avec une résistance de mesure (R₁) qui est montée en série avec au moins un des transistors de commutation (S₁, S₂), **caractérisé en ce que** la tension aux bornes de la résistance de mesure (R₁) est saisie par le biais d'un filtre capacitif passe-bas (R₂, C₆), le dispositif de mesure de courant (R₁, R₂, C₆) est conçu pour réaliser des mesures de courant uniquement à l'intérieur d'une phase de commutation respective du transformateur présentant précisément une des polarités, les mesures de courant étant réalisées à chaque fois dans une petite partie de la phase de commutation du transformateur présentant précisément la polarité en question.

2. Ballast selon la revendication 1, dans lequel le transformateur est un transformateur en demi-pont comprenant exactement deux transistors de commutation (S₁, S₂).

3. Ballast selon la revendication 2, dans lequel la lampe (L) est connectée d'une part à une prise médiane entre les deux transistors de commutation (S₁, S₂) du transformateur en demi-pont et, d'autre part, à au moins un des potentiels d'alimentation du transformateur en demi-pont par le biais d'un couplage capacitif (C₄, C₅).

4. Ballast selon l'une des revendications précédentes, comprenant un dispositif de commande numérique pour commander le fonctionnement du transformateur.

5. Ballast selon la revendication 4, dans lequel le dispositif de commande numérique est un microcontrôleur.

6. Ballast selon l'une des revendications précédentes, comprenant un circuit de régulation de courant ou de puissance pour réguler le courant de la lampe ou la puissance de la lampe.

7. Ballast selon l'une des revendications précédentes, dans lequel un convertisseur élévateur est branché avant le transformateur en tant que le circuit de correction de facteur de puissance et pour générer les potentiels d'alimentation pour le transformateur.

8. Ballast selon l'une des revendications précédentes, qui est conçu pour retourner, pendant les phases de commutation sans mesures de courant, à des valeurs enregistrées déterminées à partir de mesures de courant de la phase de commutation précédente.

9. Appareil d'éclairage comprenant un ballast selon l'une des revendications précédentes et une lampe à décharge haute pression (L) adaptée à celui-ci.

10. Procédé de fonctionnement d'une lampe à décharge haute pression (L) avec un ballast électronique pour faire fonctionner une lampe à décharge haute pression (L) comprenant un transformateur avec au moins deux transistors de commutation (S₁, S₂) pour produire une puissance d'alimentation pour la lampe (L) grâce à un fonctionnement de commutation des transistors de commutation (S₁, S₂) présentant des phases de commutation de polarité alternative des courants circulant à travers la lampe (L), le transformateur fonctionnant en tant que convertisseur abaisseur à l'intérieur des phases de commutation ; un dispositif de mesure de courant (R₁, R₂, C₆) avec une résistance de mesure (R₁) qui est montée en série avec au moins un des transistors de commutation (S₁, S₂), dispositif qui est conçu pour réaliser des mesures de courant uniquement pendant des phases de commutation du transformateur présentant précisément une des polarités, la tension aux bornes de la résistance de mesure (R₁) étant saisie par le biais d'un filtre capacitif passe-bas (R₂, C₆), **caractérisé par** les étapes suivantes :
- commutation du courant de la lampe,
- attente pendant une durée déterminée,
- mesure du courant de la lampe uniquement pour une polarité prédéterminée du courant de la lampe,
- commutation du courant de la lampe.

11. Procédé de fonctionnement d'une lampe (L) selon la revendication 10 avec un ballast selon l'une des revendications 2 - 8.
